# EUROPÄISCHE PATENTANMELDUNG

(11) **EP 2 037 130 A1**
(43) Veröffentlichungstag der Anmeldung: **18.03.2009**
(21) Anmeldenummer: 07464005.3
(22) Anmeldetag: 12.09.2007
(51) Int. Cl.: F16B 19/10, F16B 5/06

(54) **Befestigungsmittel**

(71) Anmelder: Continental Automotive GmbH, 30165 Hannover (DE)
(72) Erfinder: Tataru, Matei Vergiliu, 220089 Dr. Tr.-Severin (RO)

(57) **Zusammenfassung**

Die Erfindung betrifft ein Befestigungsmittel (100) welches ein Spreizelement (12) und ein Stiftelement (20) aufweist, wobei das Spreizelement (12) und das Stiftelement (20) über wenigstens einen Sollbruchabschnitt (34) miteinander einstückig verbunden sind, wobei der Sollbruchabschnitt (34) wenigstens eine Sollbruchstelle aufweist, die beim Befestigen mittels dem Befestigungsmittel (100) bricht.

## Beschreibung

Die Erfindung betrifft ein Befestigungsmittel, beispielsweise zum Befestigen von Verkleidungselementen in einem Fahrzeug.

Bei der Befestigung von Armaturenbrettern aus Kunststoff werden im allgemeinen Dübelverbindungen aus Kunststoff als Befestigungsmittel eingesetzt. Diese erfordern jedoch normalerweise zusätzliche Fertigungs- und Montageschritte. Die am häufigsten zum Befestigen eines Armaturenbretts verwendeten Befestigungsmittel aus Kunststoff bestehen aus zwei Einzelteilen. Diese Einzelteile werden zunächst vormontiert bevor sie später als Befestigungsmittel angebracht werden können, um zwei Teil miteinander zu verbinden. Diese Dübelverbindungen dienen dazu beispielsweise Schrauben mit einem selbstschneidenden Gewinde, Metallclipse zu ersetzen.

Aufgabe der Erfindung ist es daher eine preiswerte und einfache konstruktive Lösung für ein Befestigungsmittel bereitzustellen, bei welchem die Anzahl an Schritten reduziert werden kann, die für den Fertigungs- und Montageprozess notwendig sind.

Diese Aufgabe wird durch ein Befestigungsmittel mit den Merkmalen des Patentanspruchs 1 gelöst.

Demgemäß wird erfindungsgemäß ein Befestigungsmittel bereitgestellt, welches ein Spreizelement und ein Stiftelement aufweist, wobei das Spreizelement und das Stiftelement über wenigstens einen Sollbruchabschnitt miteinander einstückig verbunden sind, wobei der Sollbruchabschnitt wenigstens eine Sollbruchstelle aufweist, die beim Befestigen mittels dem Befestigungsmittel bricht.

Das Befestigungsmittel hat hierbei den Vorteil, dass Fertigungs- und Montageschritte reduziert werden können, da das Befestigungsmittel einstückig ausgebildet ist, bzw. das Spreizelement und das Stiftelement über wenigstens einen Sollbruchabschnitt integral miteinander verbunden sind. Dadurch müssen keine getrennten Fertigungswerkzeuge bereitgestellt werden, wie dies im Stand der Technik der Fall ist.

Ein weiterer Vorteil liegt darin, dass das Befestigungsmittel dieselben Charakteristiken bietet, wie die derzeitig verwendeten Dübelverbindungen gemäß dem Stand der Technik, wobei jedoch die Herstellung wesentlich einfacher und kostengünstiger ist, da Fertigungsschritte reduziert werden können. Entsprechendes gilt für die Montage. Hierbei ist keine Vormontage von Stiftelement und Spreizelement notwendig, wie dies bisher im Stand der Technik der Fall war. Dadurch, dass das Befestigungsmittel aus einem Teil im Rohzustand bzw. nicht montieren Zustand besteht ergibt sich auch ein vereinfachtes logistisches Management und außerdem eine einfachere Verpackung.

Gemäß der Erfindung kann das sog. Attachment Level Construct^{™} Prinzip angewendet werden, sowie das sog. Advanced Packaging Prinzip über das Design eines getesteten und implementierten Kunststoff-Befestigungsmittels (s.h. ARaymond Teilenummer 017493).

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform weist das Stiftelement an seinem unteren Ende beispielsweise einen verjüngten Abschnitt auf, beispielsweise einen kegelförmigen Abschnitt. Der verjüngte Abschnitt hat den Vorteil, dass das Stiftelement leichter in die Öffnung eingeführt werden kann. Grundsätzlich kann das Stiftelement aber auch durchgehend zylindrisch ausgebildet sein.

In einer weiteren erfindungsgemäßen Ausführungsform ist das untere Ende des Stiftelements mit dem Spreizelement über den jeweiligen Sollbruchabschnitt verbunden. Das Stiftelement kann dabei über den Sollbruchabschnitt in der Öffnung des Spreizelements zentriert sein. Dies hat den Vorteil, dass das Einführen des Stiftelements in das Spreizelement zusätzlich vereinfacht wird.

Gemäß einer anderen erfindungsgemäßen Ausführungsform ist das Stiftelement an seinem oberen Ende mit wenigstens einer Vertiefung versehen, die zumindest teilweise oder vollständig umlaufend ausgebildet ist. Die Vertiefung hat den Vorteil, dass ein Werkzeug, wie beispielsweise ein Schraubenzieher oder dergleichen darin eingreifen kann und das Stiftelement aus dem Spreizelement herausziehen kann, wenn erforderlich. Ein weiterer Vorteil ist, dass in der Vertiefung der an dem Spreizelement verbleibende abgebrochene Teil des Sollbruchabschnitts aufgenommen werden kann.

In einer weiteren erfindungsgemäßen Ausführungsform ist nicht nur das Spreizelement einstückig mit dem Stiftelement ausgebildet, sondern es ist zusätzlich auch einstückig mit einem über das Befestigungsmittel zu verbindenden Teil ausgebildet. Dies hat den Vorteil, dass weitere Fertigungs- und Montageschritte reduziert werden können und dadurch erheblich Kosten eingespart werden können.

Gemäß einer anderen erfindungsgemäßen Ausführungsform besteht der Sollbruchabschnitt beispielsweise aus wenigstens einem Steg, mehreren Perforationen und/oder einem zumindest teilweise oder vollständig umlaufenden Abschnitt, dessen Dicke derart gewählt ist, dass ein Sollbruch entsteht, wenn eine vorbestimmte Kraft auf das Stiftelement wirkt. Solche Sollbruchabschnitte haben den Vorteil, dass sie einfach herzustellen sind und eine definierte Sollbruchstelle erlauben.

Zusätzlich kann der jeweilige Sollbruchabschnitt auch durch wenigstens eine Einkerbung oder Aussparung gezielt geschwächt werden.

In einer weiteren erfindungsgemäßen Ausführungsform besteht das Befestigungsmittel aus Kunststoff oder weist diesen auf. Das Befestigungsmittel wird hierbei beispielsweise im Spritzgussverfahren hergestellt, was ein einfaches und kostengünstiges Verfahren darstellt.

Die Erfindung wird nachfolgend anhand der in den schematischen Figuren der Zeichnungen angegebenen Ausführungsbeispiele näher erläutert. Es zeigen:
- Fig. 1a: eine perspektivische Ansicht eines Befestigungsmittels gemäß dem Stand der Technik;
- Fig. 1b: eine Längsschnittansicht des Befestigungsmittels gemäß Fig. 1a;
- Fig. 1c: eine Längsschnittansicht durch das montierte Befestigungsmittel und zwei Platten, die mit dem Befestigungsmittel verbunden sind;
- Fig. 2a: eine perspektivische Ansicht eines Befestigungsmittels gemäß einer ersten Ausführungsform der Erfindung;
- Fig. 2b: eine Längsschnittansicht A-A des Befestigungsmittels gemäß Fig. 2a;
- Fig. 2c: eine Schnittansicht B-B durch das Befestigungsmittel und seine Sollbruchabschnitte;
- Fig. 2d: einen vergrößerten Ausschnitt Z des Befestigungsmittels gemäß Fig. 2b;
- Fig. 2e: eine Längsschnittansicht durch das Befestigungsmittel gemäß Fig. 2a in einem montierten Zustand;
- Fig. 2f: eine Längsschnittansicht des Befestigungsmittels gemäß Fig. 2e, wobei das Befestigungsmittel mit Hilfe eines Schraubenziehers demontiert wird, und
- Fig. 3: eine Längsschnittansicht eines Befestigungsmittels gemäß einer zweiten Ausführungsform der Erfindung.

In allen Figuren sind gleiche bzw. funktionsgleiche Elemente und Vorrichtungen - sofern nichts anderes angegeben ist - mit denselben Bezugszeichen versehen worden.

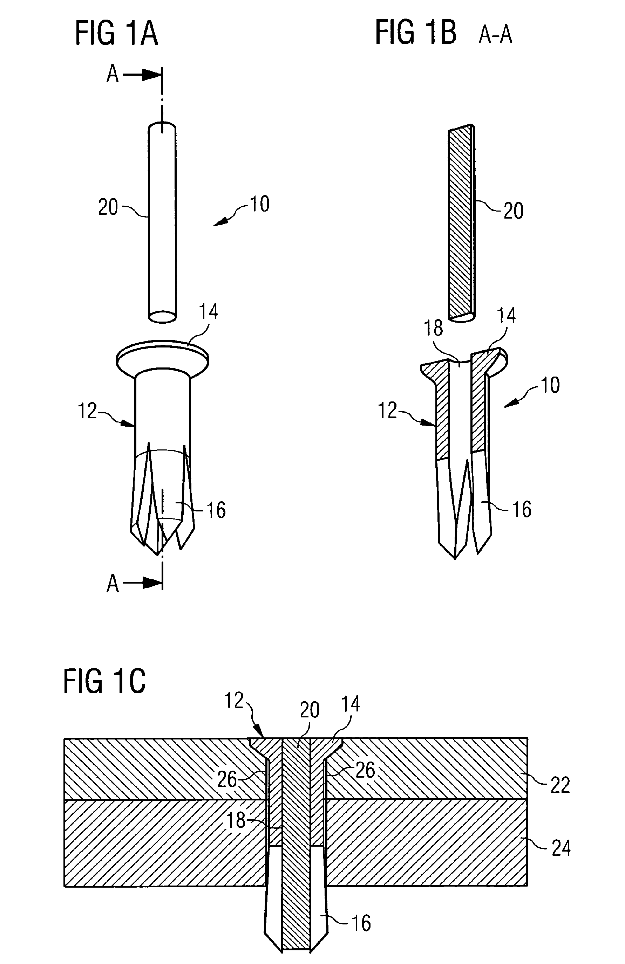

In Fig. 1a ist eine perspektivische Ansicht eines Befestigungsmittels 10 gemäß dem Stand der Technik gezeigt. Das Befestigungsmittel 10 besteht dabei aus einem Dübelelement bzw. Spreizelement 12 mit einem konisch geformten Kopf als Auflagefläche 14, an dessen unteren Ende vier längliche Spreizabschnitte 16 angeordnet sind. Das Spreizelement 12 weist eine durchgehende Öffnung 18 auf, wie in der Längsschnittansicht A-A in Fig. 1b gezeigt ist.

In die Öffnung 18 des Spreizelements 12 wird zum Befestigen ein separates zylinderförmiges Stiftelement 20 eingeführt. Das zylindrische Stiftelement 20 drückt dabei in eingeführtem Zustand die Spreizabschnitte 16 des Spreizelements 12 nach außen. Dies führt zu einem Verklemmen des Spreizelements 12 in eingebautem Zustand.

In Fig. 1c ist eine Schnittansicht gezeigt, in welchem das Befestigungsmittel 10 bestehend aus dem Spreizelement 12 und dem Stiftelement 20 in eingebautem Zustand gezeigt ist. Das Befestigungsmittel 10 verbindet dabei eine erste und zweite Platte 22, 24 miteinander. Die Platten 22, 24 sind hierbei mit einer entsprechenden Bohrung 26 versehen, in die das Spreizelement 12 eingeführt wird, bis es mit seinem konisch geformten Kopf 14 an der ersten Platte 22 anliegt. Anschließend wird das Stiftelement 20 in die Öffnung 18 des Spreizelements 12 eingeführt. Hierbei drückt das Stiftelement 20 in eingeführtem Zustand die Spreizabschnitte 16 nach außen und drückt diese dabei fest gegen die Bohrung 26 der zweiten Platte 24. Auf diese Weise werden die beiden Platten 22, 24 durch das Befestigungsmittel 10 gegeneinander verklemmt und so aneinander befestigt.

Das zuvor beschriebene Befestigungsmittel 10, wie es aus dem Stand der Technik bekannt ist, besteht dabei im Rohzustand bzw. im nicht montierten Zustand, wie er in den Fig. 1a und 1b gezeigt ist, aus zwei getrennten Teilen, nämlich dem Spreizelement 12 und dem Stiftelement 20. Diese Teile 12, 20 werden getrennt hergestellt. Dies hat jedoch den Nachteil, dass hierdurch zusätzliche Fertigungsschritte und Fertigungswerkzeuge sowie zusätzliche Montageschritte notwendig sind. Außerdem entstehen zusätzliche Kosten und ein nicht unerheblicher logistischer Aufwand. Des Weiteren können die Einzelteile 12, 20 leicht verloren gehen. Außerdem können Toleranzunterschiede bei dem Spreizelement 12 und dem Stiftelement 20 dazu führen, dass das Stiftelement 20 beispielsweise zu leichtgängig in die Öffnung 18 des Spreizelements 12 eingeführt werden kann und dessen Spreizabschnitte 16 nicht ausreichend nach außen drückt. Umgekehrt kann es aber auch passieren, dass das Stiftelement 20 zu straff in der Öffnung 18 des Spreizelements 12 geführt ist, so dass es sich später nicht mehr ohne Weiteres aus der Öffnung 18 wieder entfernen lässt, um das Spreizelement 12 bzw. das Befestigungsmittel 10 als ganzes zu entfernen.

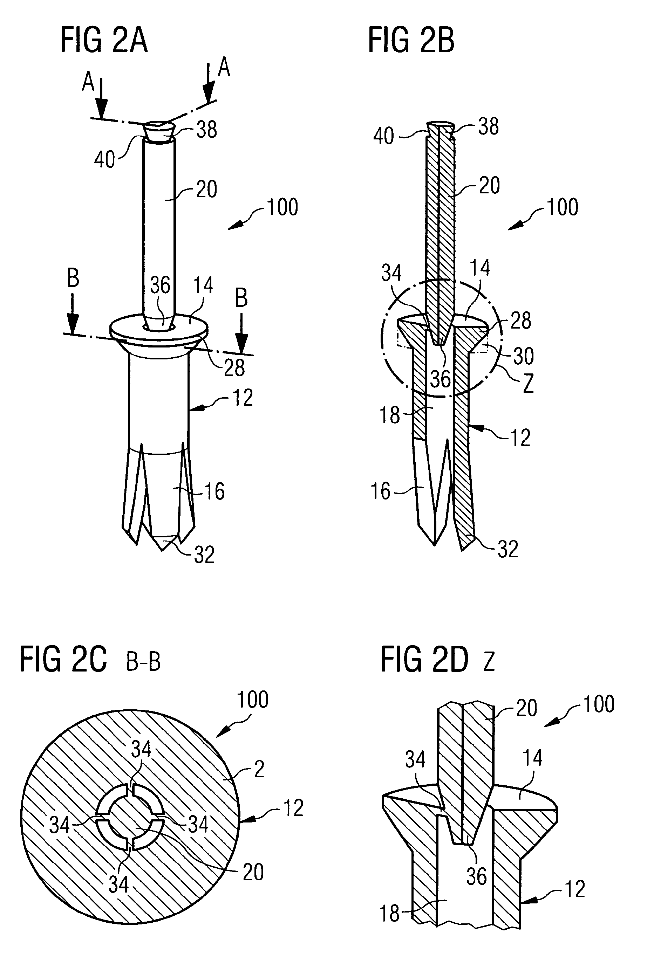

In Fig. 2a ist eine perspektivische Ansicht einer ersten Ausführungsform des erfindungsgemäßen Befestigungsmittels 100 dargestellt. Das Befestigungsmittel 100 weist dabei ein Spreizelement 12 bzw. ein Dübelelement auf, mit einer durchgehenden Öffnung 18 zum Einführen eines Stiftelements 20 in eingebautem Zustand. An seinem oberen Ende 28 weist das Spreizelement 12 eine Auflagefläche 14 auf. Diese Auflagefläche 14 kann dabei in Form eines konischen Kopfs ausgebildet sein, der sich nach oben aufweitet. Alternativ kann das obere Ende 28 aber beispielsweise auch als Ringelement 30 ausgebildet sein, wie in Fig. 2b mit einer gestrichelten Linie angedeutet ist. Dieses sind jedoch nur zwei Beispiele für eine Vielzahl von Beispielen, wie eine Auflagefläche 14 ausgebildet werden kann. Die Erfindung ist nicht auf diese beiden Beispiele beschränkt. Grundsätzlich kann das Spreizelement 12 auch mit einer anderen Auflagemöglichkeit versehen sein, als der Auflagefläche 14 am oberen Ende 28.

Des Weiteren weist das Spreizelement 12 an seinem unteren Ende 32 wenigstens einen, zwei, drei, vier oder mehr Spreizabschnitte 16 auf, die in eingebautem Zustand nach außen spreizbar sind. An dem oberen Ende 28 ist einstückig mit dem Spreizelement 12 ein Stiftelement 20 ausgebildet. Das Stiftelement 20 ist dabei über wenigstens einen Sollbruchabschnitt 34 bzw. im vorliegenden Beispiel über vier Sollbruchabschnitte 34 mit dem Spreizelement 12 verbunden, wie in Fig. 2c gezeigt ist. Die Sollbruchabschnitte 34 haben hierbei beispielsweise die Form von Stegen bzw. Brücken, die das Spreizelement 12 und das Stiftelement 20 miteinander verbinden, wie in den Fig. 2b, 2c, und 2d dargestellt ist. Sie dienen dazu bei der Montage des Befestigungsmittels 100 gezielt zu brechen, wenn das Stiftelement 20 in das Spreizelement 12 eingeführt wird, um die Spreizabschnitte 16 auseinander bzw. nach außen zu drücken und ein Verklemmen des Befestigungsmittels 100 zu bewirken.

Die Stege 34 sind dabei beispielsweise derart angeordnet, wie in Fig. 2c gezeigt ist, dass sie das Stiftelement 20 in der Öffnung 18 des Spreizelements 16 zentrieren. Dies hat den Vorteil, dass das Befestigungsmittel 100 sich sehr einfach von einem Benutzer montieren lässt, da das Stiftelement 20 in Bezug auf die Öffnung 18 bereits zentriert ist und im Wesentlichen nur noch eine ausreichend große vorbestimmte Kraft auf das Stiftelement 20 von einem Benutzer aufgebracht werden muss, um zu einem gewollten Bruch der Sollbruchstellen der Stege 34 zu führen und das Stiftelement 20 in das Spreizelement 12 einzuführen. Die Stege 34 können hierbei regelmäßig, wie in Fig. 2c gezeigt ist, um den Umfang des Stiftelements 20 angeordnet sein oder auch unregelmäßig.

In Fig. 2b ist eine Längsschnittansicht A-A des Befestigungsmittels 100 dargestellt, in der das Befestigungsmittel 100 in nicht montiertem Zustand gezeigt ist bzw. im Rohzustand, wie es beispielsweise aus Kunststoff im Kunststoffspritzgussverfahren einstückig hergestellt werden kann.

Das Stiftelement 20 weist dabei beispielsweise einen im Wesentlichen zylindrischen Aufbau auf. Das untere Ende 36 des Stiftelements 20 kann hierbei wahlweise sich nach unten verjüngend ausgebildet sein, um leichter in die Öffnung 18 des Spreizelements 12 eingeführt zu werden. Das untere Ende 36 des Stiftelements 20 und seine Befestigung über die Sollbruchabschnitte 34 an dem Spreizelement 12 ist dabei in dem vergrößerten Ausschnitt Z in Fig. 2d gezeigt.

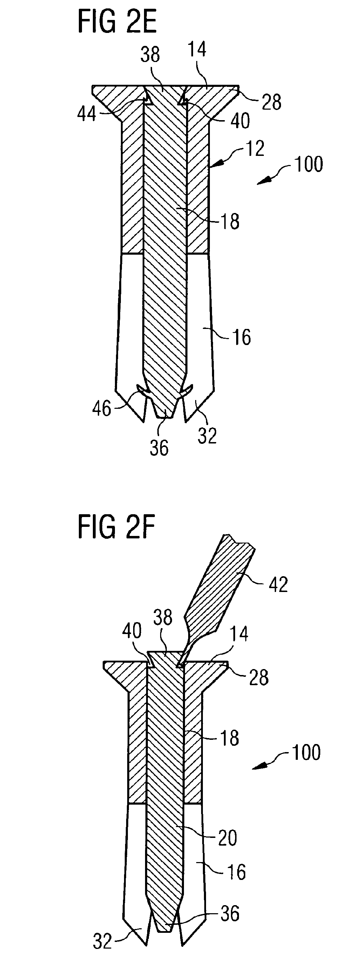

An seinem oberen Ende 38 kann das Stiftelement 20 wahlweise zusätzlich mit wenigstens einer Kerbe 40 versehen sein, wie in Fig. 2b dargestellt ist, wobei die Kerbe 40 beispielsweise teilweise oder vollständig umlaufend ausgebildet sein kann. Die Kerbe 40 kann dazu verwendet werden, dass ein Teil 44 des abgebrochenen Sollbruchabschnitts 34 bzw. des jeweiligen Stegs in der Kerbe 40 aufgenommen werden kann und dadurch nicht nach außen gedrückt wird. Des Weiteren kann die Kerbe 40 zum Entfernen des Befestigungsmittels 100 verwendet werden. Hierzu kann beispielsweise ein Werkzeug, wie ein Schraubenzieher 42, in die Kerbe 40 eingeführt werden, um das Stiftelement 20 aus der Öffnung 18 des Spreizelements 12 herauszuziehen, wie in Fig. 2f gezeigt ist. Auf diese Weise kann das Befestigungsmittel 100 bei Bedarf sehr einfach wieder entfernt werden.

In Fig. 2e ist eine Längsschnittansicht des Befestigungsmittels 100 gemäß der ersten Ausführungsform in montiertem Zustand gezeigt. Dabei ist das Stiftelement 20 in die Öffnung 18 des Spreizelements 12 vollständig eingeführt. Hierbei wurde zuvor ein gewollter Bruch der Sollbruchstellen der Sollbruchabschnitte 34 bzw. Stege erzeugt. Nachdem alle Stege 34 durchgebrochen sind kann das Stiftelement 20 in die Öffnung 18 des Spreizelements 12 eingeführt werden. Dabei wird der am Spreizelement 12 verbleibende abgebrochene Teil 44 der Stege 34 in der Kerbe 40 aufgenommen. Der andere am Stiftelement 20 verbleibende Teil 46 der abgebrochenen Stege 34 drückt dagegen zusätzlich gegen die Spreizabschnitte 16 des Spreizelements, so dass diese über das Stiftelement 20 noch stärker nach außen gedrückt werden und dadurch die Klemmwirkung des erfindungsgemäßen Befestigungsmittels 100 weiter verbessert werden kann. Die Sollbruchstellen der Sollbruchabschnitte 34 können hierbei beispielsweise derart gewählt werden, dass der am Stiftelement 20 verbleibende Teil 46 der abgebrochenen Stege 34 gleich oder größer ist als der am Spreizelement 12 verbleibende Teil 44 der abgebrochenen Stege 34. Grundsätzlich können die Sollbruchstellen je nach Funktion oder Einsatzzweck beliebig variiert werden.

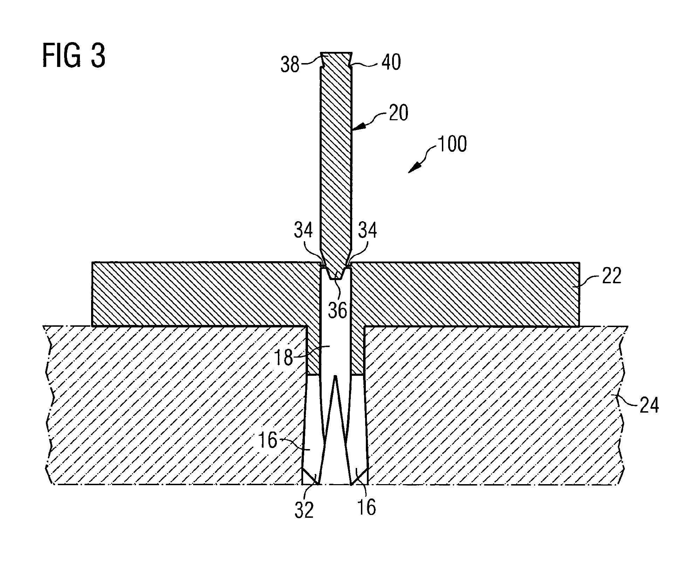

In Fig. 3 ist eine zweite Ausführungsform des erfindungsgemäßen Befestigungsmittels 100 in einer Längsschnittansicht dargestellt. Der Unterschied zwischen der ersten und zweiten erfindungsgemäßen Ausführungsform des Befestigungsmittels 100 besteht darin, dass das Spreizelement 12 in der zweiten Ausführungsform nicht nur einstückig mit dem Stiftelement 20 ausgebildet ist, sondern zusätzlich auch einstückig mit einem der zu verbindenden Teile, hier beispielsweise einer ersten Platte 22.

Die zuvor gemachten Ausführungen zu der ersten Ausführungsform gelten daher auch entsprechend für die zweite Ausführungsform.

So kann das zylinderförmige Stiftelement 20 wahlweise mit einem sich nach unten verjüngenden Ende 36 versehen sein. Des Weiteren kann das zylinderförmige Stiftelement 20 wahlweise mit wenigstens einer oder mehreren Kerben 40 an seinem oberen Ende 38 versehen sein. Die Kerben 40 können hierbei zumindest teilweise oder im Wesentlichen vollständig umlaufend ausgebildet sein. Darüber hinaus ist das Stiftelement 20 über beispielsweise zwei gegenüberliegende Sollbruchabschnitte 34, hier Brücken bzw. Stege, einstückig mit dem Spreizelement 12 verbunden. Das Spreizelement 12 ist hierbei einstückig mit einem zu verbindenden Teil, beispielsweise der ersten Platte 22, ausgebildet. Hierbei ragt zumindest der Abschnitt des Befestigungsmittels 100 mit den Spreizabschnitten 16 nach unten heraus, um in eine entsprechende Öffnung bzw. Bohrung 26 eines zu verbindenden Teils eingeführt zu werden, hier der zweiten Platte 24. Die zweite Platte 24 ist über eine gestrichelte Linie und eine Schraffur angedeutet.

Anschließend wird eine vorbestimmte Kraft auf das Stiftelement 20 aufgebracht, so dass die Sollbruchstellen der Stege 34 durchbrechen. Das Stiftelement 20 wird hierbei in die Öffnung 18 des Speizelements 12 eingeführt. Dabei drückt das Stiftelement 20 die Spreizabschnitte 16 des Spreizelements 12 nach außen und gegen die Öffnung 26 der zweiten Platte 24. Dies kann zusätzlich unterstützt werden durch die an dem Stiftelement 20 verbleibenden abgebrochenen Teile 46 der Stege 34, die die Spreizabschnitte 16 zusätzlich auseinanderdrücken, ähnlich wie in Fig. 2e. Des Weiteren können die an dem Spreizelement 16 verbleibenden abgebrochenen Teile 44 der Stege 34, in der im vorliegenden Beispiel umlaufenden Kerbe 40 aufgenommen werden.

Die zweite Ausführungsform hat dabei den Vorteil, dass weitere Fertigungs- und Montageschritte eingespart werden können, da das Spreizelement 12 einstückig mit einem zu verbindenden Teil 22 verbunden wird. Dadurch können weitere Kosten eingespart werden und darüber hinaus der logistische Aufwand zusätzlich reduziert werden.

Das Befestigungsmittel 100 in der ersten und zweiten Ausführungsform kann beispielsweise aus Kunststoff im Spritzgussverfahren hergestellt werden, ähnlich dem zuvor beschriebenen Befestigungsmittel 10 aus dem Stand der Technik. Grundsätzlich kann das Befestigungsmittel 100 jedoch auch aus jedem anderen Werkstoff bzw. aus jeder anderen Werkstoffkombination hergestellt werden, beispielsweise aus Keramik usw.. Das Material sollte dabei eine gewisse Flexibilität und/oder Elastizität aufweisen, um Spreizabschnitte 16 bereitzustellen, die nach außen biegbar sind. Dabei kann neben dem Spritzgussverfahren auch jedes andere Verfahren verwendet werden, dass geeignet ist, ein erfindungsgemäßen Befestigungsmittel 100 herzustellen, bei welchem zumindest das Spreizelement 12 und das Stiftelement 20 einstückig bzw. integral verbunden sind.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Die zuvor beschriebenen Ausführungsformen sind dabei miteinander kombinierbar, insbesondere einzelne Merkmale davon.

Bei den zuvor beschriebenen Ausführungsformen können hierbei statt Stegen 34 als Sollbruchabschnitte beispielsweise auch Perforationen (nicht dargestellt) oder eine umlaufende entsprechend dünne Wand (nicht dargestellt) als Sollbruchabschnitte ausgebildet sein. Die Dicke der umlaufenden oder zumindest teilweise umlaufenden Wand kann dabei so gewählt werden, dass sie einen Sollbruch erzeugt, wenn auf das Stiftelement 20 eine vorbestimmte Kraft aufgebracht wird. Dies sind jedoch nur einige Beispiele für eine Vielzahl von Beispielen zur Ausbildung eines Sollbruchabschnitts 34. Das Stiftelement 20 muss dabei nicht notwendigerweise über die Sollbruchabschnitte 34 in der Öffnung 18 des Spreizelements 12 zentriert werden, es hat jedoch den Vorteil, dass das Stiftelement 20 leichter in die Öffnung 18 eingeführt werden kann.

Des Weiteren können über das erfindungsgemäße Befestigungsmittel 100 beispielsweise Teile der Innenverkleidung bei einem Fahrzeug befestigt werden. Grundsätzlich kann das Befestigungsmittel 100 jedoch nicht nur in diesem Bereich eingesetzt werden, sondern in einer Vielzahl von weiteren Bereichen, in denen zwei zu verbindende Teile über eine Dübelverbindung miteinander verbunden werden. Dabei kann das Befestigungsmittel 100, wie zuvor beschrieben wurde, auch als Ersatz für eine Befestigung mittels einer Schraubverbindung und/oder Metallklammerverbindung verwendet werden, um nur einige Beispiele von vielen zu nennen.

## Patentansprüche

1. Befestigungsmittel (100) welches ein Spreizelement (12) und ein Stiftelement (20) aufweist, wobei das Spreizelement (12) und das Stiftelement (20) über wenigstens einen Sollbruchabschnitt (34) miteinander einstückig verbunden sind, wobei der Sollbruchabschnitt (34) wenigstens eine Sollbruchstelle aufweist, die beim Befestigen mittels dem Befestigungsmittel (100) bricht.

2. Befestigungsmittel nach Anspruch 1,
**dadurch gekennzeichnet,**
**dass** das Spreizelement (12) eine durchgehende Öffnung (18) aufweist zum Einführen des Stiftelements (20) und wobei das Spreizelement (12) wenigstens ein, zwei, drei, vier oder mehr Spreizabschnitte (16) aufweist, die durch das Stiftelement (20) nach außen drückbar sind, wenn das Stiftelement (20) in die Öffnung (18) des Spreizelements (12) eingeführt ist.

3. Befestigungsmittel nach wenigstens einem der Ansprüche 1 bis 2,
**dadurch gekennzeichnet,**
**dass** das Stiftelement (20) an seinem unteren Ende (36) beispielsweise einen verjüngten Abschnitt aufweist, beispielsweise einen kegelförmigen Abschnitt.

4. Befestigungsmittel nach wenigstens einem der Ansprüche 1 bis 3,
**dadurch gekennzeichnet,**
**dass** das untere Ende (36) des Stiftelements (20) mit dem Spreizelement (12) über den jeweiligen Sollbruchabschnitt (34) verbunden ist.

5. Befestigungsmittel nach wenigstens einem der Ansprüche 1 bis 4,
**dadurch gekennzeichnet,**
**dass** das Stiftelement (20) über die Verbindung mit dem jeweiligen Sollbruchabschnitt (34) in der Öffnung (18) des Spreizelements (12) zentriert ist.

6. Befestigungsmittel nach wenigstens einem der Ansprüche 1 bis 5,
**dadurch gekennzeichnet,**
**dass** das Stiftelement (20) an seinem oberen Ende (38) wenigstens eine beispielsweise zumindest teilweise oder vollständig umlaufende Vertiefung bzw. Kerbe (40) aufweist, die beispielsweise derart ausgebildet ist, dass das Stiftelement (20) über ein Werkzeug, z.B. einen Schraubenzieher (42), entfernt werden kann, indem das Werkzeug in die Vertiefung bzw. Kerbe (40) eingreift.

7. Befestigungsmittel nach wenigstens einem der Ansprüche 1 bis 6,
**dadurch gekennzeichnet,**
**dass** das Spreizelement (12) einstückig mit einem Teil (22), der über das Befestigungsmittel (100) zu verbindenden Teile (22, 24), ausgebildet ist.

8. Befestigungsmittel nach wenigstens einem der Ansprüche 1 bis 7,
**dadurch gekennzeichnet,**
**dass** der Sollbruchabschnitt (34) beispielsweise einen Steg, mehrere Perforationen und/oder einen zumindest teilweise oder vollständig umlaufenden Abschnitt aufweist, dessen Dicke derart gewählt ist, dass ein Sollbruch entsteht, wenn eine vorbestimmte Kraft auf das Stiftelement (20) wirkt.

9. Befestigungsmittel nach wenigstens einem der Ansprüche 1 bis 8,
**dadurch gekennzeichnet,**
**dass** das Spreizelement (12) und das Stiftelement (20) aus Kunststoff bestehen oder diesen aufweisen.

10. Befestigungsmittel nach wenigstens einem der Ansprüche 1 bis 9,
**dadurch gekennzeichnet,**
**dass** das Spreizelement (12) und das Stiftelement (20) im Spritzgussverfahren einstückig hergestellt sind.

11. Befestigungsmittel nach wenigstens einem der Ansprüche 1 bis 10,
**dadurch gekennzeichnet,**
**dass** das Spreizelement (12), das Stiftelement (20) und das eine über das Befestigungsmittel (100) zu verbindende Teil (22), beispielsweise einstückig aus Kunststoff zum Beispiel im Spritzgussverfahren hergestellt sind.

12. Befestigungsmittel nach Anspruch 11,
**dadurch gekennzeichnet, dass** das zu verbindende Teil (22) des Befestigungsmittels (100) beispielsweise ein Teil der Verkleidung in einem Fahrzeug ist, wie beispielsweise eine Türverkleidung oder ein Armaturenbrett.

13. Spritzgussverfahren zum Herstellen eines Befestigungsmittels gemäß einem der Ansprüche 1 bis 12 aus Kunststoff.
